# EUROPÄISCHE PATENTANMELDUNG

(11) **EP 4 572 313 A1**
(43) Veröffentlichungstag der Anmeldung: **18.06.2025**
(21) Anmeldenummer: 24213676.0
(22) Anmeldetag: 18.11.2024
(51) Int. Cl.: H04N 23/11, H04N 23/23

(54) **VERFAHREN ZUM BEREITSTELLEN EINES WÄRMEBILDES EINER WÄRMEBILDKAMERA MIT EINER ERHÖHTEN AUFLÖSUNG**

(30) Priorität: 14.12.2023 DE 102023212664
(71) Anmelder: Robert Bosch GmbH, 70442 Stuttgart (DE)
(72) Erfinder: Meyer, Patrick, 70771 Leinfelden-Echterdingen (DE); Frank, Michael, 75015 Bretten (DE); Frischen, Andreas, 71229 Leonberg (DE); Boettcher, Ina Sophie, 72226 Simmersfeld (DE); Ventsch, Nicole, 70437 Stuttgart (DE); Rumberg, Axel, 76199 Karlsruhe (DE)

(57) **Zusammenfassung**

Die Erfindung betrifft ein Verfahren (100) zum Bereitstellen eines Wärmebildes einer Wärmebildkamera (1) mit einer erhöhten Auflösung, umfassend die nachfolgenden Schritte:
- Initiieren (101) einer Vibration durch einen Vibrationsmotor (2) der Wärmebildkamera (1), um eine Bewegung bei einer Erfassung von Bilddaten durch die Wärmebildkamera (1) bereitzustellen,
- Initiieren (102) der Erfassung von Bilddaten durch die Wärmebildkamera (1) während der Vibration, wobei die Bilddaten wenigstens zwei Wärmebilder umfassen,
- Bestimmen (103) des Wärmebildes auf Basis einer Methode zur Erhöhung einer Auflösung des Wärmebildes.

Ferner betrifft die Erfindung ein Computerprogramm, eine Vorrichtung sowie ein Speichermedium zu diesem Zweck.

## Beschreibung

Die Erfindung betrifft ein Verfahren zum Bereitstellen eines Wärmebildes einer Wärmebildkamera mit einer erhöhten Auflösung. Ferner betrifft die Erfindung ein Computerprogramm, eine Vorrichtung sowie ein Speichermedium zu diesem Zweck.

### Stand der Technik

Ein Hauptargument bei der Kaufentscheidung einer Wärmebildkamera ist die Auflösung des Wärmebildes. Je höher die Auflösung ist, desto mehr Details sind erkennbar und desto mehr Anwendungsfälle können mit ihr bedient werden. Die Auflösung ist somit ein wichtiges Merkmal von hochwertigen Wärmebildkameras. Da sie jedoch direkt von der Qualität und somit vom Preis der verwendeten Infrarotsensoren abhängt, bedeutet eine bessere Auflösung durch die Sensoren automatisch auch einen höheren Preis der Komponenten. Um die Auflösung ohne teurere Komponenten dennoch zu verbessern, können alternativ Algorithmen verwendet werden, die die Bildqualität verbessern. Für die Verbesserung der Auflösung werden beispielsweise Super-Resolution-Algorithmen verwendet. Hierbei können sowohl klassische, d.h. auf klassischer Bildverarbeitung basierende, als auch maschinenlernbasierte Algorithmen verwendet werden.

Die Anwendung von Super-Resolution basiert insbesondere auf Subpixelverschiebungen zwischen einer Sequenz von Bildern. Sollte jedoch keine oder nur eine geringe Verschiebung zwischen den Bildern vorhanden sein, funktioniert der Ansatz nur eingeschränkt oder gar nicht.

### Offenbarung der Erfindung

Gegenstand der Erfindung ist ein Verfahren mit den Merkmalen des Anspruchs 1, ein Computerprogramm mit den Merkmalen des Anspruchs 9, eine Vorrichtung mit den Merkmalen des Anspruchs 10 sowie ein computerlesbares Speichermedium mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere ein Verfahren zur Anwendung einer Methode zur Erhöhung einer Auflösung eines Bildes einer Wärmebildkamera, umfassend die nachfolgenden Schritte, wobei die Schritte wiederholt und/oder nacheinander durchgeführt werden können. Die Erhöhung der Auflösung ist insbesondere ein technischer Prozess, bei dem die Anzahl der Pixel in dem Bild der Wärmekamera erhöht wird, um eine durch einen Benutzer wahrgenommene Detailgenauigkeit und Schärfe des Bildes zu verbessern. Dies kann auf verschiedene Arten erreicht werden, beispielsweise durch Interpolation, wobei neue Pixel zwischen den bestehenden Pixeln des Bildes eingefügt werden. Ferner können Super-Resolutionsalgorithmen angewandt werden, welche eine spezialisierte Form der Bildauflösungsverbesserung sind. Dabei werden insbesondere fehlende Details in niedrig aufgelösten Bildern rekonstruiert. Super-Resolutionsalgorithmen können oft detailliertere und klarere Ergebnisse liefern als eine einfache Interpolation. Die Wärmebildkamera ist vorzugsweise eine handgehaltene Wärmebildkamera, d.h. eine Wärmebildkamera, welche von einem Benutzer in der Hand gehalten und bedient werden kann.

In einem ersten Schritt wird vorzugsweise eine Vibration durch einen Vibrationsmotor der Wärmebildkamera initiiert, um eine Bewegung bei einer Erfassung von Bilddaten durch die Wärmebildkamera bereitzustellen. Die Bewegung wird somit durch die Vibration des Vibrationsmotors der Wärmebildkamera bereitgestellt.

In einem weiteren Schritt wird vorzugsweise die Erfassung von Bilddaten durch die Wärmebildkamera während der Vibration initiiert, wobei die Bilddaten wenigstens zwei Wärmebilder umfassen. Die Wärmebilder sind insbesondere Infrarotbilder und können aus einer Erfassung eines Infrarot-Kamerasensors der Wärmebildkamera resultieren. Die Bilddaten können ferner reguläre Kamerabilder umfassen, welche auch als visuelle Bilder bezeichnet werden können. Die regulären Kamerabilder können ein für einen Menschen sichtbares Lichtspektrum repräsentieren und aus einer Erfassung eines entsprechenden Kamerasensors der Wärmebildkamera resultieren.

In einem weiteren Schritt wird vorzugsweise das Wärmebild auf Basis einer Methode zur Erhöhung einer Auflösung des Wärmebildes bestimmt. Dafür können verschiedene im Stand der Technik bekannte Verfahren wie beispielsweise eine Interpolation oder eine Super-Resolution durchgeführt werden.

Verschiedene Methoden zur Erhöhung der Auflösung können bei einer zu geringen vorliegenden Bewegung nur bedingt funktionieren und sogar zu einem verschlechterten Ergebnis gegenüber den Eingabebildern führen. Durch die bereitgestellte Bewegung durch den Vibrationsmotor kann vorteilhaft sichergestellt werden, dass die Bewegung ausreichend hoch für die Methode zur Erhöhung der Auflösung ist.

Bevorzugt kann im Rahmen der Erfindung vorgesehen sein, dass im Rahmen des Bestimmens die Methode zur Erhöhung der Auflösung die folgenden Schritte umfasst, wobei die Schritte vorzugsweise nacheinander durchgeführt werden. In einem ersten Schritt wird vorzugsweise eine Subpixelverschiebung einzelner Bilder der Bilddaten gegenüber einem Referenzbild bestimmt, wobei das Referenzbild eines der einzelnen Bilder der Bilddaten ist. In diesem Schritt wird insbesondere für jedes Bild der einzelnen Bilder eine Verschiebung auf Subpixel-Ebene relativ zu dem ausgewählten Referenzbild bestimmt, beispielsweise über eine Bestimmung eines optischen Flusses. Das ausgewählte Referenzbild kann beispielsweise das zeitlich letzte Bild der einzelnen Bilder sein. Diese Verschiebung ist insbesondere notwendig, um Unterschiede in der Kameraposition oder Perspektive zwischen den Bildern auszugleichen. Die Genauigkeit auf Subpixel-Ebene ermöglicht vorteilhaft eine präzisere Ausrichtung, was die Qualität des resultierenden Bildes erhöhen kann. Die Subpixelverschiebung kann durch den Vibrationsmotor hervorgerufen oder verstärkt werden.

In einem weiteren Schritt werden vorzugsweise die einzelnen Bilder auf Basis der bestimmten Subpixelverschiebung verschoben, sodass diese auf das Referenzbild ausgerichtet sind. Nachdem die Subpixelverschiebung für jedes der einzelnen Bilder bestimmt wurde, können die Bilder demnach entsprechend verschoben werden, um sie mit dem Referenzbild auszurichten. Durch diese Ausrichtung kann vorteilhaft sichergestellt werden, dass korrespondierende Punkte in allen Bildern übereinstimmen, was insbesondere für eine anschließende Fusion der Bilder erforderlich ist.

In einem weiteren Schritt werden vorzugsweise die einzelnen Bilder um einen definierten Skalierungsfaktor skaliert. Beispielsweise kann eine vierfache Skalierung, d.h. ein definierter Skalierungsfaktor von vier, vorgesehen sein. Dies kann aus verschiedenen Gründen erfolgen, wie der Anpassung der Bilder an eine bestimmte Zielauflösung oder der Vereinheitlichung der Bildgrößen zur Verbesserung der Ausrichtung und/oder zur Reduzierung der Rechenlast bei der anschließenden Bildfusion. Im Rahmen des Skalierens können die einzelnen Bilder jeweils interpoliert werden.

In einem weiteren Schritt wird vorzugsweise ein resultierendes Bild auf Basis der skalierten einzelnen Bilder und der bestimmten Subpixelverschiebung bestimmt. Dieser Schritt kann auch als eine Fusion der Bilder zu dem resultierenden Bild verstanden werden. Im letzten Schritt wird somit insbesondere das finale hochaufgelöste Bild erzeugt, indem die zuvor skalierten und ausgerichteten Bilder miteinander kombiniert werden. Hierbei werden vorzugsweise Informationen aus allen einzelnen Bildern unter Berücksichtigung ihrer jeweiligen Subpixelverschiebungen integriert. Diese Integration kann vorteilhaft zur Erstellung eines detaillierteren und schärferen Bildes führen, das die Auflösung und Qualität gegenüber den einzelnen Ausgangsbildern deutlich verbessern kann.

Die Methode zur Erhöhung der Auflösung ist vorzugsweise ein Super-Resolutionsalgorithmus, insbesondere ein Multi-Image Super-Resolutionsalgorithmus.

Gemäß einer vorteilhaften Weiterbildung der Erfindung kann vorgesehen sein, dass die Bilddaten sowohl reguläre Kamerabilder als auch Wärmebilder umfassen, wobei die regulären Kamerabilder und die Wärmebilder parallel durch die Wärmebildkamera erfasst werden. Die regulären Kamerabilder sind insbesondere Bilder, welche in einem für einen Menschen sichtbaren Lichtspektrum liegen. Somit kann die Wärmebildkamera einen Kamerasensor für die Erfassung der regulären Kamerabilder und einen Wärmebildkamerasensor, bzw. Infrarot-Kamerasensor für die Erfassung der Wärmebilder umfassen. Die parallele Erfassung kann ausdrücken, dass gleichzeitig ein jeweiliges Paar aus einem regulären Kamerabild und einem Wärmebild erfasst wird, wobei eine zeitliche Toleranz zwischen den beiden Erfassungen akzeptiert werden kann. Dadurch kann vorteilhaft eine Verknüpfung zwischen dem parallel erfassten regulären Kamerabild und dem Wärmebild hergestellt werden.

Der Schritt des Bestimmens der Subpixelverschiebung kann anschließend auf Basis der regulären Kamerabilder durchgeführt werden, um das Verschieben, das Skalieren und das Bestimmen des resultierenden Bildes auf Basis der Wärmebilder und der auf Basis der regulären Bilder bestimmten Subpixelverschiebung durchzuführen. In den regulären Kamerabildern kann eine höhere Auflösung und/oder ein höherer erkennbarer Detailgrad in den Bildern gegeben sein, wodurch vorteilhaft ein genaueres Bestimmen der Subpixelverschiebung möglich sein kann. Alternativ oder zusätzlich können die Schritte des Bestimmens der Subpixelverschiebung, des Verschiebens, des Skalierens und des Bestimmens des resultierenden Bildes auf Basis der Wärmebilder durchgeführt werden. So kann vorteilhaft unabhängig von den regulären Kamerabildern die Methode zur Erhöhung der Auflösung durchgeführt werden. Auch kann vorgesehen sein, dass die Subpixelverschiebung sowohl auf Basis der regulären Kamerabilder, als auch auf Basis der Wärmebilder bestimmt wird, um die jeweiligen bestimmten Subpixelverschiebungen vorteilhaft vergleichen zu können, beispielsweise um Fehler zu erkennen.

Es kann im Rahmen der Erfindung vorgesehen sein, dass das Verfahren ferner den folgenden Schritt umfasst:
- Initiieren einer Anzeige des resultierenden Wärmebildes.

Die Wärmebildkamera kann dafür ein Display aufweisen, auf welchem das resultierende Wärmebild angezeigt wird. Auch ist eine Übertragung des resultierenden Wärmebildes an eine weitere Datenverarbeitungsvorrichtung denkbar, auf welchem das resultierende Wärmebild angezeigt werden soll.

Es kann von Vorteil sein, wenn im Rahmen der Erfindung das Verfahren ferner den folgenden Schritt umfasst:
- Konfigurieren einer Vibrationsfrequenz, einer Vibrationsdauer und einer Vibrationsamplitude.

Ein Wert oder Wertebereich für die Vibrationsfrequenz, die Vibrationsamplitude sowie für die Vibrationsdauer, mit welchem die Anforderung bezüglich einer ausreichenden Bewegung für die Methode für die Erhöhung der Auflösung erfüllt wird, kann individuell für eine vorliegende Wärmebildkamera bestimmt werden. Beispielsweise könnten für bestimmte Modelle von Wärmebildkameras entsprechende Mindestwerte für die Vibrationsfrequenz und/oder die Vibrationsdauer und/oder die Vibrationsamplitude vorgegeben werden. Auch ist denkbar, dass in bestimmten Szenarien eine Erhöhung der Vibrationsfrequenz und/oder der Vibrationsdauer und/oder der Vibrationsamplitude zu besseren Ergebnissen bei der Anwendung der Methode zur Erhöhung der Auflösung führen kann. Entsprechend könnte die Vibrationsfrequenz und/oder die Vibrationsdauer und/oder die Vibrationsamplitude variiert werden.

Auch ist es optional denkbar, dass das Initiieren der Vibration in Abhängigkeit von einer Auslösebedingung durchgeführt wird, wobei die Auslösebedingung eine ermittelte, in den Bilddaten repräsentierte, Bewegung ist. Die Bewegung kann ermittelt werden, indem ein jeweiliges Objekt auf Basis einer Objektdetektion und/oder -klassifikation erkannt wird und eine jeweilige Position des erkannten Objekts zwischen den einzelnen Bildern der Bilddaten verglichen wird. Für die Objektdetektion und/oder -klassifikation können beispielsweise Segmentierungsalgorithmen oder auf maschinellem Lernen basierende Detektions- oder Klassifizierungsmethoden angewandt werden. Eine weitere mögliche Auslösebedingung wäre ein Befehl wie beispielsweise ein Betätigen eines entsprechenden Knopfes an der Wärmebildkamera durch einen Benutzer.

Außerdem kann es im Rahmen der Erfindung von Vorteil sein, dass das Verfahren ferner den folgenden Schritt umfasst:
- Analysieren einer Bewegung in den erfassten Bilddaten, wobei die Bewegung durch eine Verschiebung von Pixelwerten in den Bilddaten repräsentiert ist,
Mit der Analyse der Verschiebung von Pixelwerten in den Bilddaten kann vorteilhaft gleichzeitig die Bewegung in der durch die Wärmebildkamera erfassten Szene sowie die Eigenbewegung der Wärmebildkamera berücksichtigt werden. Das Bestimmen kann dann in Abhängigkeit von einem Ergebnis des Analysierens durchgeführt werden. Dadurch kann vorteilhaft bereitgestellt werden, dass anschließend bei einer zu niedrigen Bewegung in den Bilddaten der Vibrationsmotor verwendet oder bei einer zu hohen Bewegung in den Bilddaten die Verwendung des Vibrationsmotors verhindert wird.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, einer Wärmebildkamera mit einem Vibrationsmotor, einer Vorrichtung, eines Speichermediums sowie eines Computerprogramms gemäß Ausführungsbeispielen der Erfindung,
- Fig. 2: eine schematische Darstellung eines Verfahrens gemäß Ausführungsbeispielen der Erfindung.

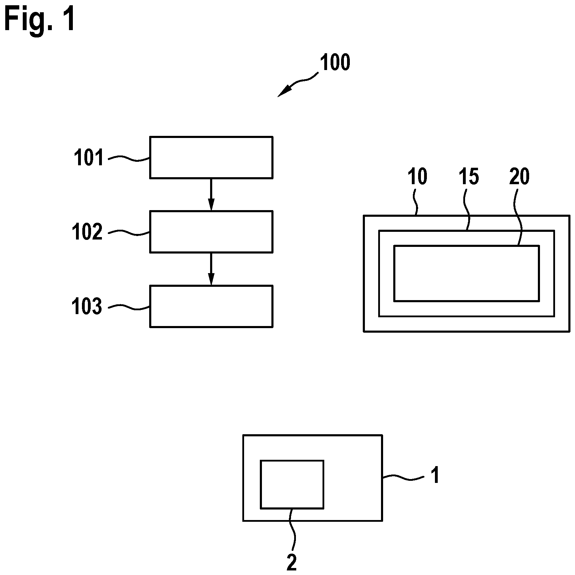

In Fig. 1 sind ein Verfahren 100, eine Wärmebildkamera 1 mit einem Vibrationsmotor 2, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zum Bereitstellen eines Wärmebildes einer Wärmebildkamera 1 mit einer erhöhten Auflösung. In einem ersten Schritt 101 wird eine Vibration durch einen Vibrationsmotor 2 der Wärmebildkamera 1 initiiert, um eine Bewegung bei einer Erfassung von Bilddaten durch die Wärmebildkamera 1 bereitzustellen. In einem zweiten Schritt 102 wird die Erfassung von Bilddaten durch die Wärmebildkamera 1 während der Vibration initiiert, wobei die Bilddaten wenigstens zwei Wärmebilder umfassen. In einem dritten Schritt 103 wird das Wärmebild auf Basis einer Methode zur Erhöhung einer Auflösung des Wärmebildes bestimmt.

Super-Resolution ist eine mögliche Methode zur Erhöhung der Auflösung von Bildern, die in Wärmebildkameras 1 angewendet werden kann. Eine Idee ist dabei, dass vorzugsweise kurz hintereinander mehrere Bilder aufgenommen und zu einem Bild mit höherer Auflösung kombiniert werden. Dies geschieht beispielsweise in zwei Schritten, wobei eine beliebige Zahl N an Bildern betrachtet werden kann. In einem ersten Schritt werden die N Bilder beispielsweise mithilfe ihres optischen Flusses relativ zu einem Referenzbild registriert, um festzustellen, wie sie zueinander verschoben sind. In einem zweiten Schritt werden die registrierten Bilder insbesondere zu einem neuen Bild mit höherer Auflösung fusioniert. Für die Bestimmung der Subpixelverschiebungen, d.h. des optischen Flusses, kann das visuelle Bild verwendet werden, da dieses eine höhere Auflösung besitzt und damit genauere Verschiebungen bestimmt werden können. Ein visuelles Bild ist im Rahmen der vorliegenden Erfindung insbesondere ein Bild, welches aus einer Erfassung einer regulären Kamera resultiert und ein für einen Menschen sichtbares Lichtspektrum repräsentiert. Die Fusion muss jedoch insbesondere auf den Wärmebildern durchgeführt werden, da diese verbessert werden sollen.

Der erste Schritt der erfolgt somit insbesondere über die Bestimmung des optischen Flusses und der zweite über iterative Verfahren, beispielsweise mithilfe von klassischen Bildverarbeitungsmethoden. Alternativ sind aber auch maschinenlernbasierte Verfahren anwendbar, die diese Schritte mithilfe von Maschinenlernmodellen, insbesondere neuronalen Netzen, lösen.

Mit der vorliegenden Erfindung kann gemäß Ausführungsbeispielen durch eine Verwendung eines Vibrationsmotors 2 künstlich eine Bewegung in Bilddaten erzeugt werden. Ein Aspekt der vorliegenden Erfindung ist somit insbesondere eine Anwendung einer Methode zur Erhöhung einer Auflösung eines Wärmebildes wie beispielsweise Super-Resolution in Wärmebildkameras 1 unter Verwendung eines Vibrationsmotors 2.

Zunächst wird vorzugsweise eine Sequenz, d.h. eine definierten Anzahl, von Bildern betrachtet, beispielsweise drei. Anschließend kann eine Verschiebung der Bilder zueinander bestimmt werden, um die Bilder aufeinander zu mappen. Anschließend werden die registrierten Bilder vorzugsweise zu einem einzelnen, besser aufgelösten Bild fusioniert. Ein Beispiel solch eines Algorithmus wäre der MMCNN-Algorithmus (Multi-Memory Convolutional Neural Network for Video Super-Resolution), es können jedoch auch andere Maschinenlernmodelle mit denselben Blocken, d.h. eine Bildregistrierung und eine anschließende Bild-Fusion, verwendet werden.

Alternativ kann der Algorithmus auch aus zwei einzelnen Maschinenlernmodellen, insbesondere neuronalen Netzwerken erstellt werden, d.h. eins für die Bildregistrierung und eins für die Bild-Fusion. Hierbei könnte zudem das visuelle Bild für eine genauere Bildregistrierung verwendet werden, aufgrund der höheren Auflösung des visuellen Bildes im Vergleich zum Wärmebild, und das Wärmebild für die Fusion, da dieses vorzugsweise verbessert werden soll. Die Maschinenlernmodelle, die verwendet werden, sind vorzugsweise bereits trainiert, sodass diese ohne große Veränderungen verwendet werden können und höchstens noch für eine bessere Performance nachtrainiert werden können.

Auch bei diesen Algorithmen, egal welcher konkret verwendet wird, müssen allerdings vorzugsweise bestimmte Voraussetzungen gegeben sein, um ein qualitativ hochwertiges Ergebnis zu erzielen. Grundvoraussetzung ist beispielsweise eine Bewegung, d.h. eine Existenz von Subpixelverschiebungen zwischen den Bildern. Daher behandelt diese Erfindung gemäß Ausführungsbeispielen eine Verwendung eines Vibrationsmotors 2 zur Bereitstellung der Bewegung, bzw. dieser Verschiebungen.

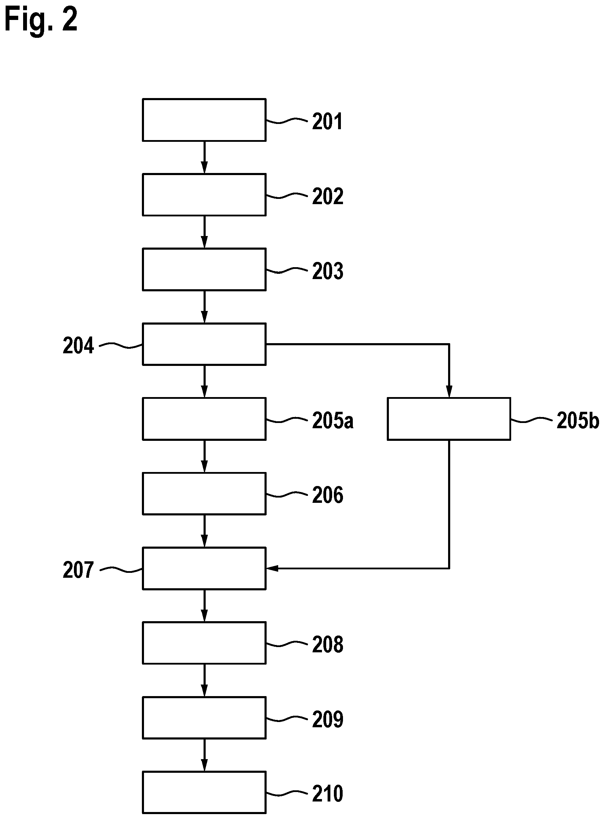

Wenn ein Wärmebild auf Basis einer Methode zur Erhöhung der Auflösung wie beispielsweise der Super-Resolution verbessert werden soll, kann das Verfahren gemäß dem in Fig. 2 gezeigten Ausführungsbeispiel durchgeführt werden. Hierbei können entweder die visuellen Bilder, d.h. Bilder, welche aus einer Erfassung eines regulären Kamerasensors resultieren, oder Wärmebilder, d.h. Bilder, welche aus einer Erfassung eines Wärmebild-, bzw. Infrarot-Kamerasensors resultieren, für die Bildregistrierung verwendet werden. Gemäß dem Ausführungsbeispiel in Fig. 2 sind somit zwei Wege möglich, je nachdem, welche Bilder für die Bildregistrierung verwendet werden. Dies könnte in einer praktischen Anwendung beispielsweise vor einem Aktivieren des Verfahrens gemäß Ausführungsbeispielen entschieden werden. Das Verfahren kann beispielsweise durch einen entsprechenden Algorithmus in der Wärmebildkamera 1 implementiert sein.

Wenn die Methode zur Erhöhung der Auflösung, gemäß Schritt 201 aktiviert wird, wird vorzugsweise gemäß Schritt 202 ein Vibrationsmotor 2 aktiviert. Während der Vibrationsmotor 2 aktiviert ist, wird nun gemäß Schritt 203 eine Sequenz von Wärme- und (falls benötigt) visuellen Bildern aufgenommen. Eine Frequenz und/oder eine Vibrationsamplitude des Vibrationsmotors 2 kann so angepasst werden, dass trotz der bereitgestellten Bewegung scharfe Fotos aufgenommen werden können. Daraufhin wird der Vibrationsmotor 2 vorzugsweise gemäß Schritt 204 wieder deaktiviert. Nun kann unterschieden werden, je nachdem ob visuelle Bilder für die Bildregistrierung verwendet werden sollen oder nicht. Ist dies der Fall, wird der optische Fluss vorzugsweise gemäß Schritt 205a für die visuellen Bilder bestimmt, um die Subpixelverschiebung zu einem Referenzbild (z.B. dem neuesten verwendeten Bild) zu erhalten. Diese Subpixelverschiebung kann dann gemäß Schritt 206 auf die Wärmebilder übertragen werden. Diese werden anschließend gemäß Schritt 207 insbesondere um ganze Pixel so verschoben, dass der Bildinhalt möglichst übereinanderliegt. Anschließend werden die Wärmebilder vorzugsweise gemäß Schritt 208 auf ein Vielfaches der ursprünglichen Größe (z.B. vierfach) skaliert, bzw. interpoliert, und unter Berücksichtigung der festgestellten Subpixelverschiebung fusioniert, um auf Basis einer Fusionierung der skalierten Bilder gemäß Schritt 209 ein hochskaliertes Wärmebild zu erhalten. Dieses kann anschließend gemäß Schritt 210 auf einem Display der Wärmebildkamera 1 angezeigt werden.

Falls die visuellen Bilder nicht für die Bildregistrierung verwendet werden sollen, wird vorzugsweise nach dem Ausschalten des Vibrationsmotors 2 gemäß Schritt 205b der optische Fluss für die Wärmebilder bestimmt, sodass sich die Subpixelverschiebung der Wärmebilder relativ zu einem Referenzbild aus der Sequenz ergibt. Anschließend können die Wärmebilder gemäß Schritt 207 um ganze Pixel so verschoben werden, dass der Bildinhalt möglichst übereinanderliegt. Schließlich werden die Wärmebilder vorzugsweise gemäß Schritt 208 auf ein Vielfaches der ursprünglichen Größe (z.B. vierfach) skaliert, bzw. interpoliert und gemäß Schritt 209 unter Berücksichtigung der festgestellten Subpixelverschiebung fusioniert, um ein hochskaliertes Wärmebild zu erhalten. Dieses kann anschließend gemäß Schritt 210 auf einem Display der Wärmebildkamera 1 angezeigt werden.

Dabei kann die Methode zur Erhöhung der Auflösung, insbesondere der Super-Resolution-Algorithmus, sowohl beim Abspeichern der Bilder oder in einer Computer- oder Smartphone-App zur Nachbearbeitung verwendet werden. Der Vibrationsmotor 2 zur Bewegungserzeugung mit anschließender Aufnahme einer Sequenz von Bildern kann in der Wärmebildkamera 1 angeordnet sein und angewendet werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Bereitstellen eines Wärmebildes einer Wärmebildkamera (1) mit einer erhöhten Auflösung, umfassend die nachfolgenden Schritte:
- Initiieren (101) einer Vibration durch einen Vibrationsmotor (2) der Wärmebildkamera (1), um eine Bewegung bei einer Erfassung von Bilddaten durch die Wärmebildkamera (1) bereitzustellen,
- Initiieren (102) der Erfassung von Bilddaten durch die Wärmebildkamera (1) während der Vibration, wobei die Bilddaten wenigstens zwei Wärmebilder umfassen,
- Bestimmen (103) des Wärmebildes auf Basis einer Methode zur Erhöhung einer Auflösung des Wärmebildes.

2. Verfahren (100) nach Anspruch 1,
**dadurch gekennzeichnet,**
**dass** im Rahmen des Bestimmens (103) die Methode zur Erhöhung der Auflösung die folgenden Schritte umfasst:
- Bestimmen einer Subpixelverschiebung einzelner Bilder der Bilddaten gegenüber einem Referenzbild, wobei das Referenzbild eines der einzelnen Bilder der Bilddaten ist,
- Verschieben der einzelnen Bilder der Bilddaten auf Basis der bestimmten Subpixelverschiebung, sodass diese auf das Referenzbild ausgerichtet sind,
- Skalieren der einzelnen Bilder der Bilddaten um einen definierten Skalierungsfaktor,
- Bestimmen eines resultierenden Bildes auf Basis der skalierten einzelnen Bilder der Bilddaten und der bestimmten Subpixelverschiebung.

3. Verfahren (100) nach einem der vorhergehenden Ansprüche,
**dadurch gekennzeichnet,**
**dass** die Bilddaten sowohl reguläre Kamerabilder als auch Wärmebilder umfassen, wobei die regulären Kamerabilder und die Wärmebilder parallel durch die Wärmebildkamera (1) erfasst werden.

4. Verfahren (100) nach den Ansprüchen 2 und 3,
**dadurch gekennzeichnet,**
**dass** der Schritt des Bestimmens der Subpixelverschiebung auf Basis der regulären Kamerabilder durchgeführt wird, um das Verschieben, das Skalieren und das Bestimmen des resultierenden Bildes auf Basis der Wärmebilder und der auf Basis der regulären Bilder bestimmten Subpixelverschiebung durchzuführen, oder
**dass** der Schritt des Bestimmens der Subpixelverschiebung, des Verschiebens, des Skalierens und des Bestimmens des resultierenden Bildes auf Basis der Wärmebilder durchgeführt werden.

5. Verfahren (100) nach einem der Ansprüche 2 bis 4,
**dadurch gekennzeichnet,**
**dass** das Verfahren (100) ferner den folgenden Schritt umfasst:
- Initiieren einer Anzeige des resultierenden Wärmebildes.

6. Verfahren (100) nach einem der vorhergehenden Ansprüche,
**dadurch gekennzeichnet,**
**dass** das Verfahren (100) ferner den folgenden Schritt umfasst:
- Konfigurieren einer Vibrationsfrequenz, einer Vibrationsdauer und einer Vibrationsamplitude.

7. Verfahren (100) nach einem der vorhergehenden Ansprüche,
**dadurch gekennzeichnet,**
**dass** das Initiieren (101) der Vibration in Abhängigkeit von einer Auslösebedingung durchgeführt wird, wobei die Auslösebedingung eine ermittelte, in den Bilddaten repräsentierte, Bewegung ist.

8. Verfahren (100) nach einem der vorhergehenden Ansprüche,
**dadurch gekennzeichnet,**
**dass** das Verfahren (100) ferner den folgenden Schritt umfasst:
- Analysieren einer Bewegung in den erfassten Bilddaten, wobei die Bewegung durch eine Verschiebung von Pixelwerten in den Bilddaten repräsentiert ist,
wobei das Bestimmen (103) in Abhängigkeit von einem Ergebnis des Analysierens durchgeführt wird.

9. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

10. Vorrichtung (10) zur Datenverarbeitung, die eingerichtet ist, das Verfahren (100) nach einem der Ansprüche 1 bis 8 auszuführen.

11. Computerlesbares Speichermedium (15), umfassend Befehle, die bei der Ausführung durch einen Computer (10) diesen veranlassen, die Schritte des Verfahrens (100) nach einem der Ansprüche 1 bis 8 auszuführen.
